# EUROPEAN PATENT SPECIFICATION

(11) **EP 2 451 046 B1**
(45) Date of publication and mention of the grant of the patent: **29.04.2020**
(21) Application number: 11188171.0
(22) Date of filing: 08.11.2011
(51) Int. Cl.: H02J 7/00, H04Q 9/00

(54) **TELECOMMUNICATION SYSTEM**
TELEKOMMUNIKATIONSSYSTEM
SYSTÈME DE TÉLÉCOMMUNICATION

(30) Priority: 09.11.2010 JP 2010250695
(43) Date of publication of application: 09.05.2012
(73) Proprietor: Keihin Corporation, Shinjuku-ku, Tokyo (JP)
(72) Inventor: Ito, Tsukasa, Tochigi-ken (JP); Yamauchi, Makoto, Tochigi-ken (JP)
(74) Representative: Ilgart, Jean-Christophe

(56) References cited:
- EP-A1- 2 164 127
- WO-A2-02/43321
- US-A1- 2004 208 158

## Description

### BACKGROUND OF THE INVENTION

### FIELD OF THE INVENTION

The present invention relates to a telecommunication system.

### DESCRIPTION OF THE RELATED ART

It is well known that vehicles such as electric cars and hybrid cars are mounted with a motor and a high-pressure, high-capacity battery. The motor acts as a power source. The high-pressure, high-capacity battery supplies electric power to this motor. This battery is structured by connecting a plurality of battery cells in series. The battery cell includes a lithium-ion battery, a hydrogen nickel battery, and the like. Conventionally, in order to use the battery safely, the cell voltage of each battery cell is monitored. In this way, a control is performed to prevent an overcharge and an over discharge.

In general, in order to monitor the cell voltage of each cell included in the battery, a plurality of measuring units are prepared according to the total number of cells. The measuring unit is able to simultaneously measure the cell voltage of a plurality of cells. See for example publication EP 2 164 127.

In more precise terms, approximately 100 µs is necessary in order to obtain a measurement result of voltage (digital value) of the entire twelve cells, for example. However, when a discrepancy occurs in the timing at which the measuring unit measures the cell voltage, it is difficult to precisely determine the condition of each cell (whether the cell is overcharged or in a state of over discharge). Thus, it becomes difficult to perform a control of the battery in an appropriate manner.

For example, according to the technology disclosed in Japanese Unexamined Patent Application No. 2002-354697 (hereinafter referred to as "Patent Document 1"), a plurality of monitoring devices are provided. These monitoring devices can measure the cell voltage for a plurality of cells. Each monitoring device measures the cell voltage each time a predetermined amount of time (approximately twenty ms to ninety ms, for example) passes. As a result, the timing at which the monitoring devices measures the cell voltage is synchronized (matched). In addition, according to this technology disclosed in Patent Document 1, the monitoring device includes a master monitoring device and a subservient monitoring device. The master monitoring device receives a clock signal from a system controller. The subservient monitoring device receives a clock signal from the master monitoring device. Each device communicates in synchrony with the clock signal. In this way, the communication between each device is synchronized.

Furthermore, according to the technology disclosed in Patent Document 1, each monitoring device has a feature such that the monitoring device switches into a dormant condition when the clock signal is not supplied for a certain period of time. When an abnormality occurs in the battery, the supply of clock signal from the system controller to the master monitoring device is halted. Furthermore, the master monitoring device and the subservient monitoring device are switched into a dormant condition. In this way, electric power is prevented from being wasted.

However, according to the technology disclosed in Patent Document 1, even if an abnormality has not occurred in a battery, the subservient device is switched to a dormant condition when the master monitoring device malfunctions and the supply of clock signal to the subservient monitoring device is halted. Therefore, even though the subservient monitoring device is normal, it becomes impossible for the subservient monitoring device to measure the cell voltage and transmit the measurement result of the cell voltage to the system controller. Thus, when a malfunction occurs, it is difficult to continue communicating.

The present invention is made according to the considerations described above. An object of the present invention is to provide a telecommunication system which can maintain a continuous communication even when a malfunction occurs.

### SUMMARY OF THE INVENTION

In order to achieve the above object, the present invention employs the following.
(1) Namely, a telecommunication system according to an aspect of the present invention includes: a master unit; a plurality of sub units; and a timer, wherein the plurality of sub units transmits to the master unit, an operation result of a predetermined operation; a transmission of the operation result to the master unit from at least one of the plurality of sub units is monitored by an other sub unit among the plurality of sub units; when the transmission of the operation result is not observed for a predetermined period of time, the other sub unit transmits to the master unit based on the timer, an operation result obtained by the predetermined operation.
(2) In addition, the above telecommunication system according to (1) may be configured as follows: The at least one of the plurality of sub units executes the predetermined operation at a first period, and transmits to the master unit in a plurality of groups, an operation result of the predetermined operation at a second period shorter than the first period. When a transmission of the operation result to the master unit from the at least one of the plurality of sub units is not observed for a predetermined period of time, the other sub unit executes the predetermined operation at a third period based on the timer, and transmits to the master unit in a plurality of groups, an operation result of the predetermined operation at a fourth period shorter than the third period.
(3) In addition, the above telecommunication system according to (1) or (2) may be configured as follows: The master unit and the plurality of sub units are connected via a CAN bus.
(4) In addition, the above telecommunication system according to any one of (1) to (3) may be configured as follows: The master unit is a battery control unit managing a charging and a discharging of a battery including a cell. The sub unit is a cell voltage sensor unit measuring a voltage of the cell as the predetermined operation and transmitting to the battery control unit, a measurement result of the voltage of the cell as the operation result.

### EFFECT OF THE INVENTION

According to the present invention, even when the additional subservient unit has malfunctioned and the processing result cannot be transmitted to the master unit, another subservient unit may transmit to the master unit, a processing result obtained by each of the predetermined processes. As a result, it is possible to maintain a continuity of the telecommunication even when a malfunction occurs.

### BRIEF DESCRIPTION OF THE DRAWINGS

FIG. 1 is a schematic diagram of a structure of a battery management system (telecommunication system) according to an embodiment of the present invention.
FIG. 2A is a flow chart showing a telecommunication operation of a main sensor unit SU1.
FIG. 2B is a flow chart showing a telecommunication operation of a main sensor unit SU1.
FIG. 3 is a first flow chart showing a telecommunication operation of a sub-sensor unit SU2 - SU4.
FIG. 4A is a second flow chart showing a telecommunication operation of a sub-sensor unit SU2 - SU4.
FIG. 4B is a second flow chart showing a telecommunication operation of a sub-sensor unit SU2 - SU4.

### DETAILED DESCRIPTION OF THE PREFERRED EMBODIMENTS

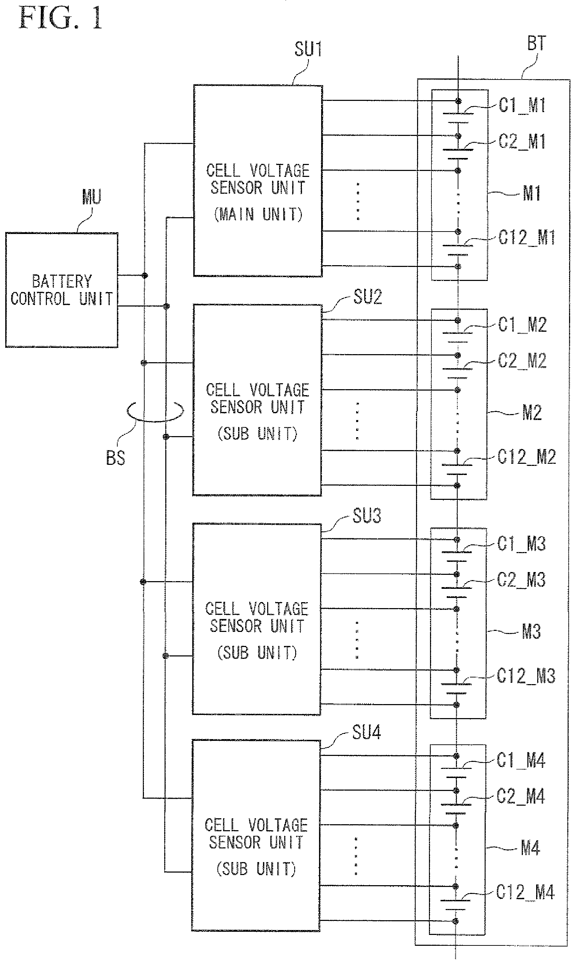

Hereinafter, an embodiment of the present invention is described with reference to the attached diagrams. In the following description, a system described as an example of an embodiment of a telecommunication system according to the present invention is a battery management system managing a charging and a discharging of a battery mounted on a vehicle such as an electric vehicle and a hybrid vehicle. As shown in FIG. 1, this battery management system includes a battery BT, a battery control unit MU, and four cell voltage sensor units SU1 to SU4.

The battery BT is configured so that four self modules M1 to M4 are connected in series.

In addition, each cell module M1 to M4 is configured so that twelve battery cells (hereinafter referred to as "cell") are connected in series. Each battery cell includes a lithium ion battery or a hydrogen nickel battery.

In other words, the battery BT is structured so that a total of 48 cells are connected in series.

Incidentally, in FIG. 1, the reference numerals C1_M1 to C12_M1 indicate each cell included in the cell module M1. The reference numerals C1_M2 to C12_M2 indicate each cell included in the cell module M2. The reference numerals C1_M3 to C12_M3 indicate each cell included in the cell module M3. The reference numerals C1_M4 to C12_M4 indicate each cell included in the cell module M4.

The battery control unit MU and each cell voltage sensor unit SU1 to SU4 are connected via a telecommunication bus BS (CAN bus). The telecommunication bus BS includes two telecommunication lines (twist pair lines). The CAN (Controller Area Network) telecommunication employs a differential voltage telecommunication method in which data of "0" or "1" is transmitted depending on whether there is a difference in the voltage of two telecommunication lines included in the telecommunication bus BS. Therefore, the CAN telecommunication has a high anti-noise capacity. Further, the CAN telecommunication is suitable for telecommunication between units mounted on a vehicle.

The cell voltage sensor unit SU1 is connected to both terminals (positive terminal, negative terminal) of each cell C1_M1 to C12 M1 with thirteen wires in order to measure the voltage (cell voltage) between the terminals of each cell C1_M1 to C12_M1 included in the cell module M1.

The cell voltage sensor unit SU2 is connected to both terminals of each cell C1_M2 to C12_M2 with thirteen wires in order to measure the cell voltage of each cell C1_M2 to C12_M2 included in the cell module M2.

The cell voltage sensor unit SU3 is connected to both terminals of each cell C1_M3 to C 12_M3 with thirteen wires in order to measure the cell voltage of each cell C1_M3 to C12_M3 included in the cell module M3.

The cell voltage sensor unit SU4 is connected to both terminals of each cell C1_M4 to C12_M4 with thirteen wires in order to measure the cell voltage of each cell C1_M4 to C12_M4 included in the cell module M4.

The cell voltage sensor unit SU1 measures the cell voltage of each of the cells C1_M1 to C12_M1 included in the cell module M1 in the first period. In addition, in the second period which is shorter than the first period, the cell voltage sensor unit SU1 divides the measurement results of the cell voltage and performs a CAN transmission to the battery control unit MU Here, a CAN transmission refers to a transmission in which a data frame for transmission (hereinafter referred to as a transmission frame) is created by setting the measurement results of the cell voltage (digital data) to a data field of a data frame prescribed by a CAN protocol, and this data frame is transmitted by a differential voltage transmission method.

The first period and the second period may be set as appropriate according to the bit length of the measurement result of the cell voltage for each cell. For example, if the bit length of the measurement result of the cell voltage for each cell is 16 bits, the maximum bit length for setting to a data field of a data frame prescribed by a CAN protocol is 64 bits. Therefore, in one CAN transmission, the measurement result of a cell voltage for only four cells can be transmitted. Therefore, if the bit length of the measurement result of the cell voltage for each cell is 16 bits, the measurement results of a cell voltage for twelve cells need to be transmitted in three parts.

In this case, for example, when the first period is 60 ms, and the second period is 20 ms, the cell voltage sensor unit SU1 simultaneously measures in a period of 60 ms, the cell voltage of twelve cells C1_M1 to C12_M1 included in the cell module M1. Incidentally, in precise terms, the cell voltage sensor unit SU1 measures the cell voltage (A/D conversion) in series from the cell C1_M1. As a result, approximately 100 µs is needed to obtain the measurement results of the cell voltage of all of the twelve cells (16 bit data × 12). Therefore, 100 µs, which is the duration of time required to measure the cell voltage of all of the twelve cells, is, in practical terms, a value which ensures the simultaneousness of the timing at which the cell voltage is measured.

Further, the cell voltage sensor unit SU1 transmits the measurement results of the cell voltage for twelve cells obtained as described above in a period of 60 ms by dividing the measurement results into a first group including the measurement results of the cell voltage of cells C1_M1 to C4_M1, a second group including the measurement results of the cell voltage of cells C5_M1 to C8_M1, and a third group including the measurement results of the cell voltage of cells C9_M1 to C12_M1, and by setting the measurement results of the cell voltage included in each group to a data frame in series at a period of 20 ms, and thereby transmitting the measurement results. As a result, in 60 ms, the measurement results of the cell voltage of all of the twelve cells are transmitted to the battery control unit MU

By the way, in the following description, a cell voltage sensor unit SU1 having the characteristics as described above is referred to as a main sensor unit, for convenience.

Meanwhile, the cell voltage sensor unit SU2 monitors the transmission of the transmission frame from the main sensor unit SU1 to the battery control unit MU. When the first transmission of the transmission frame is observed, the cell voltage sensor unit SU2 measures the cell voltage of each of the cells C1_M2 to C12_M2 included in the cell module M2. In addition, the cell voltage sensor unit SU2 divides the measurement results of the cell voltage in the second period, and performs a CAN transmission of the measurement results to the battery control unit MU

The second period of the cell voltage sensor unit SU2 is set to be the same value as the second period of the main sensor unit SU1. In other words, when the second period equals 20 ms, the cell voltage sensor unit SU2 simultaneously measures the cell voltage of the twelve cells C1_M2 to C12_M2 included in the self module M2, at the time a first transmission of the transmission frame from the main sensor unit SU1 to the battery control unit MU is observed. The first transmission of the transmission form is observed in the period of 60 ms. Incidentally, in precise terms, approximately 100 µs is necessary to obtain all of the measurement results of the cell voltage of all twelve cells. However, the simultaneousness of the timing at which the cell voltage is measured is assured.

Further, the cell voltage sensor unit SU2 transmits the measurement results of the cell voltage for twelve cells obtained as described above by dividing the measurement results into a first group including the measurement results of the cell voltage of cells C1_M2 to C4_M2, a second group including the measurement results of the cell voltage of cells C5_M2 to C8_M2, and a third group including the measurement results of the cell voltage of cells C9_M2 to C12_M2, and by setting the measurement results of the cell voltage included in each group to a data frame in series at a period of 20 ms, and thereby transmitting the measurement results. As a result, until the next time at which the first transmission of the transmission frame from the main sensor unit SU1 to the battery control unit MU is observed, in other words in 60 ms, the measurement results of the cell voltage of all of the twelve cells are transmitted to the battery control unit MU

In addition, when a transmission of the transmission frame from the main sensor unit SU1 to the battery control unit MU is not observed for a certain period of time, the cell voltage sensor unit SU2 measures the cell voltage of each of the cells C1_M2 to C12_M2 included in the cell module M2 during the third period based on a timer. In addition, during the fourth period which is shorter than the third period, the cell voltage sensor unit SU2 divides the measurement results of the cell voltage and performs a CAN transmission to the battery control unit MU. According to the present embodiment, the third period is set to be an equal value as the first period (60 ms), and the fourth period is set to be an equal value as the second period (20 ms). However, the third period may be set to a value different from the first period. Similarly, the fourth period may be set to a value different from the second period.

The cell voltage sensor unit SU3 also monitors a transmission of a transmission frame from the main sensor unit SU1 to the battery control unit MU in a similar manner. When the first transmission of the transmission frame is observed, the cell voltage sensor unit SU3 measures the cell voltage of each of the cells C1_M3 to C12_M3 included in the self module M3. In addition, during the second period, the cell voltage sensor unit SU3 divides the measurement results of the cell voltage and performs a CAN transmission to the battery control unit MU.

In other words, when the first transmission of the transmission frame from the main sensor unit SU1 to the battery control unit MU is observed, the cell voltage sensor unit SU3 simultaneously measures the cell voltage of the twelve cells C1_M3 - C12_M3 included in the cell module M3. Incidentally, in precise terms, approximately 100 µs is necessary to obtain all of the measurement results of the cell voltage of all twelve cells. However, the simultaneousness of the timing at which the cell voltage is measured is assured.

Further, the cell voltage sensor unit SU3 transmits the measurement results of the cell voltage for twelve cells obtained as described above by dividing the measurement results into a first group including the measurement results of the cell voltage of cells C1_M3 to C4_M3, a second group including the measurement results of the cell voltage of cells C5_M3 to C8_M3, and a third group including the measurement results of the cell voltage of cells C9_M3 to C12_M3, and by setting the measurement results of the cell voltage included in each group to a data frame in series at a period of 20 ms, and thereby transmitting the measurement results. As a result, until the next time at which the first transmission of the transmission frame from the main sensor unit SU1 to the battery control unit MU is observed, in other words in 60 ms, the measurement results of the cell voltage of all of the twelve cells included in the cell module M3 are transmitted to the battery control unit MU.

In addition, when a transmission of the transmission frame from the main sensor unit SU1 to the battery control unit MU is not observed for a certain period of time, the cell voltage sensor unit SU3 measures the cell voltage of each of the cells C1_M3 to C12_M3 included in the cell module M3 during the third period based on a timer. In addition, during the fourth period which is shorter than the third period, the cell voltage sensor unit SU3 divides the measurement results of the cell voltage and performs a CAN transmission to the battery control unit MU.

The cell voltage sensor unit SU4 also monitors a transmission of a transmission frame from the main sensor unit SU1 to the battery control unit MU in a similar manner. When the first transmission of the transmission frame is observed, the cell voltage sensor unit SU4 measures the cell voltage of each of the cells C1_M4 to C12_M4 included in the self module M4. In addition, during the second period, the cell voltage sensor unit SU4 divides the measurement results of the cell voltage and performs a CAN transmission to the battery control unit MU.

In other words, when the first transmission of the transmission frame from the main sensor unit SU1 to the battery control unit MU is observed, the cell voltage sensor unit SU4 simultaneously measures the cell voltage of the twelve cells C1_M4 - C12_M4 included in the cell module M4. Incidentally, in precise terms, approximately 100 µs is necessary to obtain all of the measurement results of the cell voltage of all twelve cells. However, the simultaneousness of the timing at which the cell voltage is measured is assured.

Further, the cell voltage sensor unit SU4 transmits the measurement results of the cell voltage for twelve cells obtained as described above by dividing the measurement results into a first group including the measurement results of the cell voltage of cells C1_M4 to C4_M4, a second group including the measurement results of the cell voltage of cells C5_M4 to C8_M4, and a third group including the measurement results of the cell voltage of cells C9_M4 to C12_M4, and by setting the measurement results of the cell voltage included in each group to a data frame in series at a period of 20 ms, and thereby transmitting the measurement results. As a result, until the next time at which the first transmission of the transmission frame from the main sensor unit SU1 to the battery control unit MU is observed, in other words in 60 ms, the measurement results of the cell voltage of all of the twelve cells included in the cell module M4 are transmitted to the battery control unit MU.

In addition, when a transmission of the transmission frame from the main sensor unit SU1 to the battery control unit MU is not observed for a certain period of time, the cell voltage sensor unit SU4 measures the cell voltage of each of the cells C1_M4 to C12_M4 included in the cell module M4 during the third period based on a timer. In addition, during the fourth period which is shorter than the third period, the cell voltage sensor unit SU4 divides the measurement results of the cell voltage and performs a CAN transmission to the battery control unit MU.

Incidentally, for purposes of convenience, in the following description, the cell voltage sensor units SU2 - SU4 having the same characteristics as described above are referred to as a sub sensor unit.

According to the present battery management system configured as described above, the battery control unit MU corresponds to the "master unit" according to the present invention. The cell voltage sensor units SU1 - SU4 correspond to the "subservient unit" according to the present invention. In addition, the main sensor unit SU1 corresponds to "at least one subservient unit." The sub sensor units SU2 - SU4 correspond to "an other subservient unit."

Incidentally, when a transmission frame is transmitted from the main sensor unit SU1 to the battery control unit MU, a differential voltage occurs at the transmission bus BS according to the transmission frame. Therefore, each of the sub sensor units SU2 - SU4 may also receive the transmission frame. Hence, each of the sub sensor units SU2 - SU4 monitors the transmission of the transmission frame from the main sensor unit SU1 to the battery control unit MU according to a differential voltage imported from the transmission bus BS.

In addition, as is well known, a data frame prescribed by a CAN protocol includes information ("ID") which determines the priority ranking of adjusting a transmission. Therefore, even when a CAN transmission (transmission of the transmission frame) from each of the sub sensor units SU2 - SU4 is performed simultaneously to the battery control unit MU, the transmission is made in succession from a transmission frame of a unit having a high priority ranking. Therefore, a collision of data does not occur.

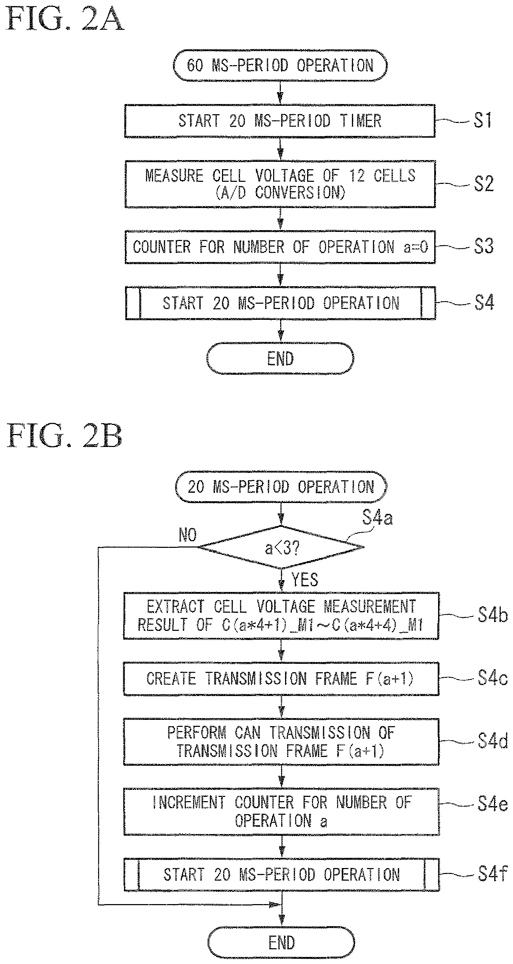

Next, the transmission operation of the present battery management system explained above is described in detail. FIGS. 2A and 2B are flowcharts showing a transmission operation of the main sensor unit SU1. The main sensor unit SU1 performs a 60 ms-period operation shown in FIG. 2A at a period of 60 ms. As shown in FIG. 2A, the main sensor unit SU1 starts a 20 ms-period timer at the same time when the 60 ms period starts (step S1).

Next, the main sensor unit SU1 performs a measurement (A/D conversion) of a cell voltage of each of the cells C1_M1 to C12_M1 included in the cell module M1. Thus, the main sensor unit SU1 obtains the measurement results of the cell voltage of twelve cells (16 bit data times 12) (step S2). Incidentally, as described above, approximately 100 µs is necessary to obtain all of the measurement results of the cell voltage of all twelve cells. However, the simultaneousness of the timing at which the cell voltage is measured is assured. Furthermore, the main sensor unit SU1 resets the operation number counter a to "0" (step S3). Then, the main sensor unit SU1 starts the 20 ms-period-operation shown in FIG. 2B (step S4).

After the 20 ms-period-operation has started, the main sensor unit SU1 determines, as shown in FIG. 2B, whether or not the operation number counter a is less than "3" (step S4a). When the result is "No" (i.e., when a ≥ 3), the 20 ms-period-operation is terminated. On the other hand, in the step S4, when the result is "Yes" (a < 3), the main sensor unit SU1 extracts from the measurement results of the cell voltage for the twelve cells, the (a+1)th group including the measurement results of the cell voltage for cells C(a×4 + 1)_M1 to C(a×4 + 4)_M1 (step S4b).

Here, in the case of a first 20 ms-period-operation, the counter for the number of operations a equals zero. As a result, in step S4b, a first group (64 bit data) including the measurement results of the cell voltage of cells C1_M1 to C4_M1 is extracted from the measurement results of the cell voltage of twelve cells.

Next, the main sensor unit SU1 creates a transmission frame F(a+1) by setting the measurement results of the cell voltage included in the (a+1)th group to the data field of the data frame (step S4c). Then, the main sensor unit SU1 performs a CAN transmission of the transmission frame F(a+1), created as described above, to the battery control unit MU (step S4d). Here, when the counter for the number of operation a equals zero (a=0), for example, the transmission frame F(a+1) becomes F(1). F(1) refers to the transmission frame which is transmitted for the first time.

Then, the main sensor unit SU1 increments the counter for the number of operation a (step S4e). The main sensor unit SU1 performs the 20 ms-period-operation, described above, at a timing at which the 20 ms-period timer completes measuring 20 ms (i.e., the timing at which the measurement of the next 20 ms period is measured) (step S4f).

In other words, when the 20 ms-period-operation is performed for the second time, the counter for the number of operation a equals 1 (a=1). As a result, in step S4b described above, a second group including the measurement result of the cell voltage of cells C5_M1 to C8_M1 is extracted from the measurement results of the cell voltage for the twelve cells. In step S4d, the transmission frame F(2) including the measurement result of the cell voltage included in the second group is sent to the battery control unit MU via a CAN transmission.

Furthermore, when the 20 ms-period-operation is performed for the third time, the counter for the number of operation a equals 2 (a=2). As a result, in step S4b described above, a third group including the measurement result of the cell voltage of cells C9_M1 to C12_M1 is extracted from the measurement results of the cell voltage for the twelve cells. In step S4d, the transmission frame F(3) including the measurement result of the cell voltage included in the third group is sent to the battery control unit MU via a CAN transmission.

As a result of the transmission operation of the main sensor unit SU1 described above, the measurement result of the cell voltage for the twelve cells included in the module M1 is obtained at a period of 60 ms. In addition, during this 60 ms period, the measurement result of the cell voltage for all of the twelve cells is divided into three groups and is transmitted to the battery control unit MU at a period of 20 ms.

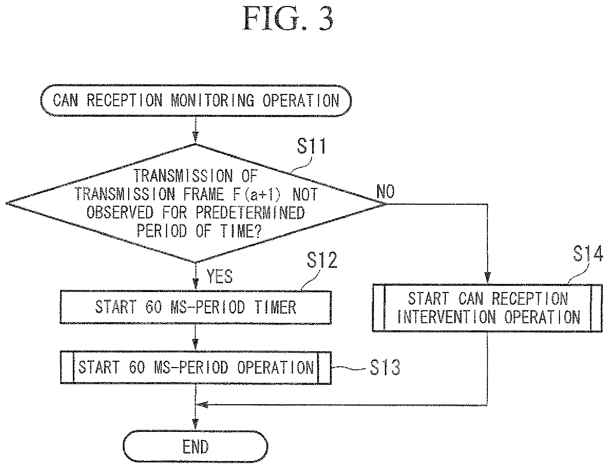

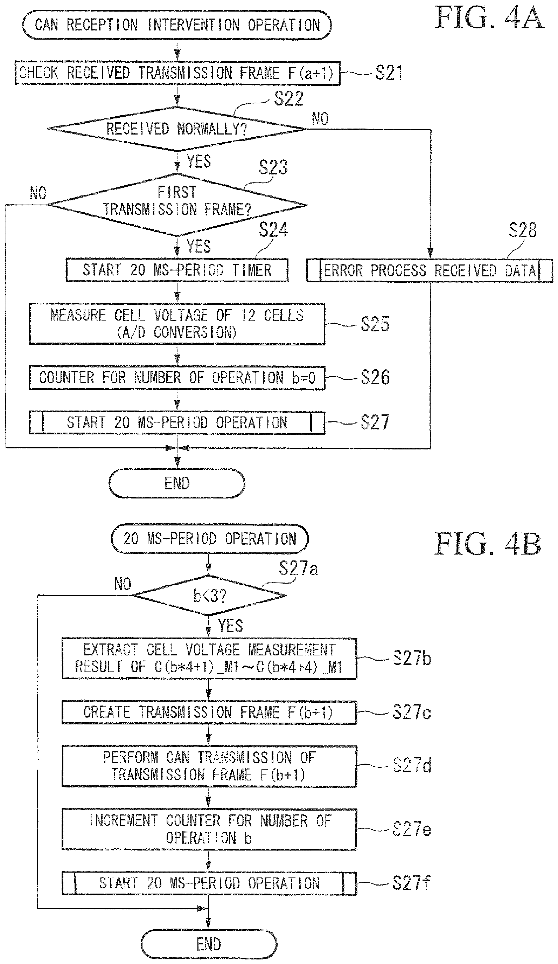

FIGS. 3, 4A, and 4B are flowcharts showing a transmission operation of the sub sensor units SU2 - SU4. Incidentally, the transmission operation shown in FIGS. 3 and 4 is performed by each of the sub sensor units SU2 - SU4. In the following description, an explanation of the sub sensor unit SU2 is provided as a representative example.

As described above, when the transmission frame F(a+1) is transmitted from the main sensor unit SU1 to the battery control unit MU, a differential voltage occurs at the transmission bus BS according to the transmission frame. As a result, the sub sensor unit SU2 may also receive the transmission frame F(a+1). Therefore, the sub sensor unit SU2 executes a monitoring operation of the CAN reception shown in FIG. 3 based on the differential voltage imported from the transmission bus BS.

As shown in FIG. 3, based on the differential voltage imported from the transmission bus BS, the sub sensor unit SU2 determines whether or not a transmission of the transmission frame F(a+1) from the main sensor unit SU1 to the battery control unit MU was observed for a certain period of time (i.e., whether the differential voltage did not change for a certain period of time) (step S11).

When the result of step S1 is "Yes," the sub sensor unit SU2 starts the timer for the 60 ms period (step S12). At the same time, the sub sensor unit SU2 starts a 60 ms-period-operation in a similar manner as the main sensor unit SU1 (step S13). In other words, when a transmission of the transmission frame F(a+1) from the main sensor unit SU1 to the battery control unit MU is not observed for a certain period of time, the sub sensor unit SU2 measures the cell voltage of the twelve cells included in the cell module M2 at a period of 60 ms. In addition, the sub sensor unit divides the measurement result of the cell voltage and performs a CAN transmission to the battery control unit MU at a period of 20 ms.

As a result, even if the main sensor unit SU1 has malfunctioned, and a transmission of the transmission frame F(a+1) to the battery control unit MU cannot be performed, the sub sensor unit SU2 can continue to measure the cell voltage of the twelve cells included in the self module M2 and continue to transmit the measurement result of the cell voltage to the battery control unit MU

On the other hand, when the result in the step S11 is "No," and when a transmission of the transmission frame F(a+1) from the main sensor unit SU1 to the battery control unit MU is observed within a certain period of time (i.e, when the transmission frame F(a+1) is received), the sub sensor unit SU2 performs the CAN reception intervention operation shown in FIG. 4A as an intervention operation at a timing at which the transmission frame F(a+1) is received.

As shown in this FIG. 4A, when the sub sensor unit SU2 receives the transmission frame F(a+1) and begins the CAN reception intervention operation, the sub sensor unit SU2 checks the transmission frame F(a+1) which was received (step S21). The sub sensor unit SU2 determines whether or not a reception was made properly (step S22).

When the result in the step S22 is "Yes" (i.e., when the reception has been made properly), the sub sensor unit SU2 determines whether or not the transmission frame F(a+1) that has been received is the first transmission frame that was first transmitted from the main sensor unit SU1 to the battery control unit MU (step S23).

When the result of the step S23 described above is "Yes," i.e., when a first transmission of the transmission frame F(1) from the main sensor unit SU1 to the battery control unit MU is observed, the sub sensor unit SU2 starts the timer for the 20 ms period (step S24), measures the cell voltage of each of the cells C1_M2 to C12_M2 included in the cell module M2, and obtains the measurement result of the cell voltage for twelve cells (step S25).

In addition, the sub sensor unit SU2 resets the counter b for the number of operations to "0" (step S26). Then, the sub sensor unit SU2 starts the 20 ms-period-operation shown in FIG. 4B (step S27). Incidentally, when the result of step S22 above is "No" (i.e., when an abnormality has been received), the sub sensor unit SU2 carries out a predetermined error processing on received data (step S28).

After the 20 ms-period-operation is started, the sub sensor unit SU2 determines, as shown in FIG. 4B, whether or not the counter b for the number of operations is less than "3" (step S27a). When the result is "No" (i.e., b≥3), the sub sensor unit SU2 terminates the 20 ms-period-operation. On the other hand, when the result in step S27a above is "Yes" (i.e., b<3), the sub sensor unit SU2 extracts a (b+1)th group including the measurement results of the cell voltage of cells C(b×4+1)_M2 to C(b×4+4)_M2 from the measurement results of the cell voltage of twelve cells (step S27b).

Here, in the case of the first 20 ms-period-operation, the counter b for the number of operations equals zero (b=0). Therefore, in step S27b, the first group (64 bit data) including the measurement result of the cell voltage of cells C1_M2 to C4_M2 is extracted from the measurement result of the cell voltage of twelve cells. Next, the sub sensor unit SU2 creates a transmission frame F(b+1) by setting the measurement result of the cell voltage included in the (b+1)th group to the data field of the data frame (step S27c). Next, the sub sensor unit SU2 transmits the transmission frame F(b+1), created as described above, to the battery control unit MU via a CAN transmission (step S27d).

Further, the sub sensor unit SU2 increments the counter b for the number of operations (step S27e). In addition, the sub sensor unit SU2 carries out the 20 ms-period-operation at a timing at which the timer for the 20 ms-period completes measuring 20 ms (i.e., the timing at which the time measurement for the next 20 ms-period is commenced) (step S27f).

In other words, when a 20 ms-period-operation is carried out for the second time, the counter b for the number of operations equals one (b=1). Therefore, in step S27 described above, the second group including the measurement results of the cell voltage for cells C5_M2 to C8_M2 is extracted from the measurement result of the cell voltage of twelve cells. In step S27 described above, the transmission frame F(2) including the measurement results for the cell voltage included in the second group is transmitted to the battery control unit MU via a CAN transmission.

Furthermore, when a 20 ms-period-operation is carried out for the third time, the counter b for the number of operations equals two (b=2). Therefore, in step S27 described above, the third group including the measurement results of the cell voltage for cells C9_M2 to C12_M2 is extracted from the measurement result of the cell voltage of twelve cells. In step S27 described above, the transmission frame F(3) including the measurement results for the cell voltage included in the third group is transmitted to the battery control unit MU via a CAN transmission.

According to the transmission operation of the sub sensor unit SU2 as described above, when a first transmission of the transmission frame from the main sensor unit SU1 to the battery control unit MU is observed, the measurement results of the cell voltage for twelve cells included in the module M2 are obtained. In addition, until the first transmission of the transmission frame from the main sensor unit SU1 to the battery control unit MU is observed next, all of the measurement results of the cell voltage for the twelve cells are divided into three groups and are transmitted to the battery control unit MU at a period of 20 ms.

Further, when the first transmission of the transmission form from the main sensor unit SU1 to the battery control unit MU is not observed, i.e., when the main sensor unit SU1 malfunctions, and the transmission frame F(a+1) cannot be transmitted to the battery control unit MU, the measurement results of the cell voltage for the twelve cells included in the module M2 are obtained at a period of 60 ms. In addition, all of the measurement results of the cell voltage for the twelve cells are divided into three groups and are transmitted to the battery control unit MU at a period of 20 ms.

The sub sensor units SU3 and SU4 perform the same transmission operation as the sub sensor unit SU2 performs. Therefore, consequently, when the first transmission of the transmission frame from the main sensor unit SU1 to the battery control unit MU is observed, the measurement results of the cell voltage for 36 cells included in the modules M2 to M4 are obtained simultaneously. In addition, until the first transmission of the transmission frame from the main sensor unit SU1 to the battery control unit MU is observed next, all of the measurement results of the cell voltage for the 36 cells are divided into three groups at a period of 20 ms, and are transmitted to the battery control unit MU.

Furthermore, even when the first transmission of the transmission frame from the main sensor unit SU1 to the battery control unit MU is not observed, the measurement results of the cell voltage of 36 cells included in modules M2 to M4 are obtained at a period of 60 ms. In addition, all of the measurement results of the cell voltage of the 36 cells are divided into three groups and are transmitted to the battery control unit MU at a period of 20 ms.

As described above, according to the present embodiment, even when the main sensor unit SU1 malfunctions and a transmission frame cannot be transmitted to the battery control unit MU, the other sub sensor units SU2 to SU4 may transmit to the battery control unit MU, the measurement result of the cell voltage obtained by measuring the cell voltage of twelve cells. Therefore, a continuity of communication may be maintained even when a malfunction occurs.

Incidentally, according to the present embodiment, there is no time discrepancy in the timing at which the sub sensor units SU2 to SU4 measures the cell voltage (i.e., the measurements are in synchrony). However, between the main sensor unit SU1 and the sub sensor unit SU2 to SU4, there is a discrepancy in the timing at which the cell voltage is measured. However, this discrepancy is of a degree which can be practically tolerated. Therefore, the timing at which the cell voltage sensor units SU1 to SU4 measure the cell voltage is synchronized in the overall system.

The present invention is not limited to the embodiment described above. The following modifications may be made.
(1) According to the embodiment described above, an example was described in which each of the cell voltage sensor units SU1 to SU4 divides the measurement results of the cell voltage of twelve cells into three groups and transmits to the battery control unit MU. However, when the measurement result of the cell voltage of one cell module may be transmitted via a CAN transmission in one transmission, it is not necessary to divide the measurement results into groups. Such instances include a case in which the number of cells in one cell module is small and a case in which the bit length of the measurement result of a cell voltage for one cell is small.
   When a transmission is made in this way without dividing the measurement results into groups, the main sensor unit SU1 measures the cell voltage of the twelve cells included in the cell module M1 at a predetermined period. In addition, the main sensor unit SU1 transmits to the battery control unit MU, the transmission frame including the measurement result of the cell voltage. On the other hand, each of the sub sensor units SU2 to SU4 obtains the measurement result of the cell voltage of 36 cells included in the modules M2 to M4 when the transmission of the transmission frame from the main sensor unit SU1 to the battery control unit MU is observed. Further, each of the sub sensor units SU2 to SU4 transmits to the battery control unit MU, the transmission frame including the measurement result of the cell voltage of 36 cells included in the modules M2 to M4. In addition, when a transmission of the transmission frame from the main sensor unit SU1 to the battery control unit MU is not observed for a certain period of time, each of the sub sensor units SU2 to SU4 obtains the measurement results of the cell voltage of the 36 cells included in the modules M2 to M4 at a period of 60 ms. Further, each of the sub sensor units SU2 to SU4 transmits to the battery control unit MU, the transmission frame including the measurement results of the cell voltage of the 36 cells included in the modules M2 to M4.
(2) According to the embodiment described above, a battery management system managing a charging and discharging of a battery mounted on vehicles such as electric cars and hybrid cars was given as an example of a communication system based on the present invention. However, the present invention is not limited to this embodiment. The present invention may be applied broadly to a communication system configured so that the communication system includes a master unit and a plurality of subservient units, and the plurality of subservient units transmits to the master unit, an operation result of a predetermined operation.
(3) According to the embodiment described above, a battery management system including four cell voltage sensor units SU1 to SU4 was given as an example. However, the number of cell voltage sensor units (i.e., the subsidiary units) is not limited to this configuration. The number of cell voltage sensor units need only be greater than or equal to two. In addition, the number of cell modules included in the battery BT is not limited to four. Further, the number of cells included in the cell module is not limited to twelve.

While a preferred embodiment of the present invention has been described above with reference to the attached figures, it should be noted that these are exemplary of the invention and are not to be considered as limiting the present invention. Additions, omissions, substitutions, and other modifications can be made without departing from the scope of the present invention as defined by the appended claims.

## Claims

1. A telecommunication system comprising:
a battery control unit (MU) for managing a charging and a discharging of a battery (BT); and
a plurality of cell voltage sensor units (SU1-SU4), each of the cell voltage sensor units (SU1-SU4) being provided in each of cell modules (M1-M4), having a timer, for performing a voltage measurement operation of cells (C1-C12) configuring the cell modules, and for transmitting to the battery control unit (MU), a voltage measurement result of the voltage measurement operation,
wherein
at least one of the plurality of cell voltage sensor units (SU1) is configured to execute the voltage measurement operation at a first period, and to transmit to the battery control unit (MU) in a plurality of groups, a voltage measurement result of the voltage measurement operation at a second period shorter than the first period;
wherein
when a first transmission of the voltage measurement result to the battery control unit (MU) from the at least one of the plurality of cell voltage sensor units (SU1) is observed, each of the other cell voltage sensor units (SU2-SU4) simultaneously executes the voltage measurement operation of the cells (C1-C12), and transmits a voltage measurement result to the battery control unit (MU) until the next time at which the first transmission from the at least one of the plurality of cell voltage sensor units (SU1) to the battery control unit (MU) is observed, and
when a transmission of the voltage measurement result to the battery control unit (MU) from the at least one of the plurality of cell voltage sensor units (SU1) is not observed for a predetermined period of time, each of the other cell voltage sensor units (SU2-SU4) executes the voltage measurement operation of the cells (C1-C12) at a third period based on the timer, and transmits to the battery control unit (MU) in a plurality of groups, the voltage measurement result of the voltage measurement operation at a fourth period shorter than the third period, and
wherein the battery control unit (MU) and the plurality of cell voltage sensor units (SU1-SU4) are connected via a CAN bus (BS).

## Patentansprüche

1. Telekommunikationssystem, umfassend Folgendes:
eine Batteriesteuereinheit (MU) zum Verwalten einer Aufladung und einer Entladung einer Batterie (BT); und
eine Mehrzahl von Zellenspannungssensoreinheiten (SU1-SU4), wobei jede von den Zellenspannungssensoreinheiten (SU1-SU4) in jedem von Zellenmodulen (M1-M4) vorgesehen ist, umfassend einen Timer, zum Durchführen einer Spannungsmessoperation von Zellen (C1-C12), die die Zellenmodule konfigurieren, und zum Übertragen eines Spannungsmessergebnisses der Spannungsmessoperation an die Batteriesteuereinheit (MU),
wobei wenigstens eine von der Mehrzal von Zellenspannungssensoreinheiten (SU1) dazu konfiguriert ist, die Spannungsmessoperation in einer ersten Periode auszuführen, und an die Batteriesteuereinheit (MU) in einer Mehrzahl von Gruppen ein Spannungsmessergebnis der Spannungsmessoperation in einer zweiten Periode zu übertragen, die kürzer als die erste Periode ist;
wobei dann, wenn eine erste Übertragung des Spannungsmessergebnisses an die Batteriesteuereinheit (MU) von der wenigstens einen von der Mehrzahl von Zellenspannungssensoreinheiten (SU1) beobachtet wird, jede von den anderen Zellenspannungssensoreinheiten (SU2-SU4) gleichzeitig die Spannungsmessoperation der Zellen (C1-C12) ausführt, und ein Spannungsmessergebnis an die Batteriesteuereinheit (MU) bis zum nächsten Zeitpunkt überträgt, an dem die erste Übertragung von der wenigstens einen von der Mehrzahl von Zellenspannungssensoreinheiten (SU1) an die Batteriesteuereinheit (MU) beobachtet wird, und
wenn eine Übertragung des Spannungsmessergebnisses an die Batteriesteuereinheit (MU) von der wenigstens einen von der Mehrzahl von Zellenspannungssensoreinheiten (SU1) für eine vorbestimmte Zeitperiode nicht beobachtet wird, jede von den anderen Zellenspannungssensoreinheiten (SU2-SU4) die Spannungsmessoperation der Zellen (C1-C12) in einer dritten Periode basierend auf dem Timer ausführt und an die Batteriesteuereinheit (MU) in einer Mehrzahl von Gruppen das Spannungsmessergebnis der Spannungsmessoperation in einer vierten Periode überträgt, die kürzer als die dritte Periode ist, und
wobei die Batteriesteuereinheit (MU) und die Mehrzahl von Zellenspannungssensoreinheiten (SU1-SU4) mittels eines CAN-Bus (BS) verbunden sind.

## Revendications

1. Système de télécommunication comprenant :
une unité de commande de batterie (MU) pour gérer une charge et une décharge d'une batterie (BT) ; et
une pluralité d'unités de capteur de tension de cellule (SU1 à SU4), chacune des unités de capteur de tension de cellule (SU1 à SU4) étant prévue dans chacun des modules de cellule (M1 à M4), ayant un minuteur, pour réaliser une opération de mesure de tension de cellules (C1 à C12) configurant les modules de cellule, et pour transmettre à l'unité de commande de batterie (MU), un résultat de mesure de tension de l'opération de mesure de tension,
dans lequel
au moins l'une de la pluralité d'unités de capteur de tension de cellule (SU1) est configurée pour exécuter l'opération de mesure de tension à une première période, et pour transmettre à l'unité de commande de batterie (MU) dans une pluralité de groupes, un résultat de mesure de tension de l'opération de mesure de tension à une deuxième période plus courte que la première période ;
dans lequel
lorsqu'une première transmission du résultat de mesure de tension à l'unité de commande de batterie (MU) depuis l'au moins une de la pluralité d'unités de capteur de tension de cellule (SU1) est observée, chacune des autres unités de capteur de tension de cellule (SU2 à SU4) exécute simultanément l'opération de mesure de tension des cellules (C1 à C12), et transmet un résultat de mesure de tension à l'unité de commande de batterie (MU) jusqu'à la fois suivante à laquelle la première transmission depuis l'au moins une de la pluralité d'unités de capteur de tension de cellule (SU1) à l'unité de commande de batterie (MU) est observée, et
lorsqu'une transmission du résultat de mesure de tension à l'unité de commande de batterie (MU) depuis l'au moins une de la pluralité d'unités de capteur de tension de cellule (SU1) n'est pas observée pendant une période de temps prédéterminée, chacune des autres unités de capteur de tension de cellule (SU2 à SU4) exécute l'opération de mesure de tension des cellules (C1 à C12) à une troisième période sur la base du minuteur, et transmet à l'unité de commande de batterie (MU) dans une pluralité de groupes, le résultat de mesure de tension de l'opération de mesure de tension à une quatrième période plus courte que la troisième période, et
dans lequel l'unité de commande de batterie (MU) et la pluralité d'unités de capteur de tension de cellule (SU1 à SU4) sont connectées via un bus CAN (BS).
